# EUROPEAN PATENT APPLICATION

(11) **EP 2 372 110 A2**
(43) Date of publication of application: **05.10.2011**
(21) Application number: 11157434.9
(22) Date of filing: 09.03.2011
(51) Int. Cl.: F01D 25/28

(54) **Support frame**

(30) Priority: 30.03.2010 GB 1005351; 11.05.2010 GB 1007784
(71) Applicant: Rolls-Royce plc, London SW1E 6AT (GB)
(72) Inventor: Latham, Hannah Elizabeth, Sheffield, S11 9FR (GB); Vianello, Stefano, Derby, DE1 2EB (GB); Beliaev, Pavel, Derby, DE21 4HJ (GB); Payne, Christopher Ricardo, Oxshott, Surrey KT22 0TN (GB)
(74) Representative: Tindall, Adam

(57) **Abstract**

A frame for the support of a bladed array, such as a compressor rotor stage or turbine rotor stage for turbo machinery, comprises a collar configured to fit around a radially outer periphery of the array. The collar is provided with a closure mechanism. The closure mechanism is configured to, in use, close the collar around the bladed array such that at least part of at least some of the blades are engaged with and/or captured by the radially inner surface of the collar. The collar and bladed array are held in a fixed relationship relative to one another.

## Description

The present invention relates to a support frame.

In particular the invention is concerned with a frame for the support of a bladed array.

Handling of components during manufacture is problematic when it is critical to preserve the surface finish of the component. This is especially the case in the manufacture of rotor blade arrays for turbo machinery. Since both the bore of the rotor and gas washed surfaces are critical, great care must be taken when handling them. Bladed discs (i.e. components where rotor blades and discs are integral) are especially problematic to handle since damage in one region may result in rework or scrapping of the whole component.

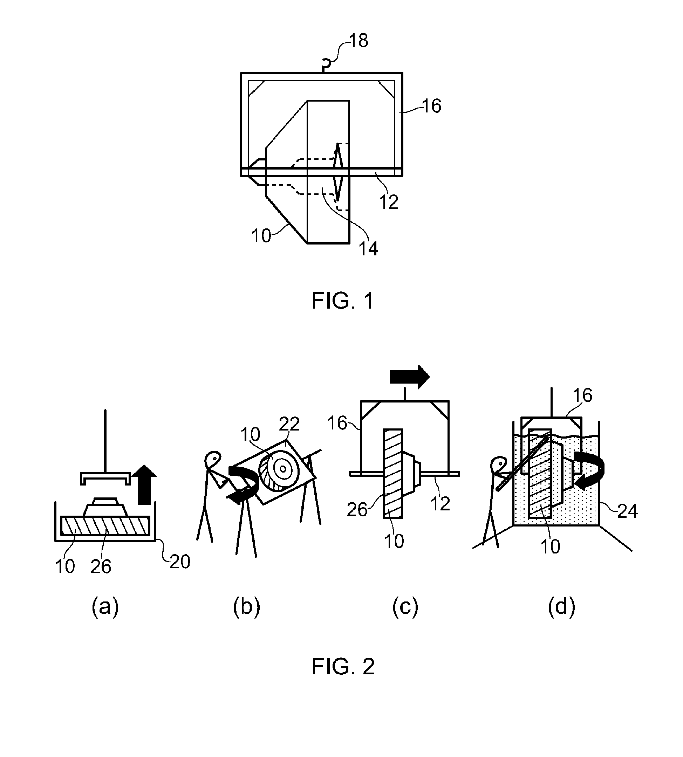

A rotor blade array 10 (or "bladed array") is typically carried on an arbour 12 which is passed through a central bore 14 of the array 10 as shown in Figure 1. The arbour 12 is coupled to a cradle frame 16 and a crane attached to the frame via a hook 18 on the frame 16. However, bladed discs 10 are typically transported in a pallet 20 in a horizontal orientation, as shown in Figure 2a, and so even the process for mounting them on an arbour 12 is time consuming and introduces risk of damage to the array 10. The array 10 must first be lifted from the pallet 20 (see Figure 2a), onto a table 22 (see Figure 2b) where it must be rotated before the arbour 12 is slid into position so the array can be moved (see Figure 2c). This motion must be carefully controlled, usually by hand with a pole, as the suspended assembly can swing from side to side.

Bladed discs 10 may be subject to many chemical processes throughout their manufacture (for example washing, cleaning and etching), and using the arbour means that the array 10 must be rotated in tanks 24 of chemicals by engaging a tool on the aerofoil blades (see Figure 2d), which may result in damage to the gas washed surfaces.

Damage to the rotor 10 may occur when the arbour 12 is installed as it must be fitted blind through the inner bore 14 of the bladed disc 10, which may result in the arbour 12 hitting the bladed disc 10. The cradle frame 16 may contact the bladed disc 10 during fitting of the arbour 12 and this can cause blades 26 of the bladed disc 10 to be damaged by the cradle frame 16. As the bladed disc 10 is lifted into a chemical tank 24 the exposed blades 26 may hit various parts of the tank 24 due to swinging of the cradle frame 16 on the crane.

Conventional handling means are also potentially more hazardous because exposed rotor blade edges may be sharp and cause injury to the operators during handling.

Hence a device which, in use, both enables easy handling of bladed discs and protects critical surfaces of the bladed disc is highly desirable.

According to a first aspect of the present invention there is provided a frame for the support of a bladed array, such as a compressor rotor stage or turbine rotor stage for turbo machinery, comprising a collar configured to fit around a radially outer periphery of the array, whereby the collar is provided with a closure mechanism and the closure mechanism is configured to, in use, close the collar around the bladed array such that at least part of at least some of the blades are engaged with and/or captured by the radially inner surface of the collar such that the collar and bladed array are held in a fixed relationship relative to one another.

According to second aspect of the present invention there is provided a method of supporting of a bladed array, such as a compressor rotor stage or turbine rotor stage for turbo machinery, wherein the array is supported on its radially outer periphery.

Hence the present invention provides a means for handling a rotor blade array which may be easily fitted without risk of damage to the bladed array and, once fitted, acts as a shield between the bladed array and objects or operators it may come into contact with.

Embodiments of the invention will now be described with reference to the accompanying drawings, in which:
Figure 1 shows a known apparatus for lifting bladed arrays, as referred to in the preceding description;
Figure 2 shows known methods of handling bladed arrays, as referred to in the preceding description;
Figure 3 shows a side view of frame of the present invention, including a collar and closure mechanism;
Figure 4 shows a side view of the frame of the present invention supporting a bladed array;
Figure 5 shows a perspective view of the frame of the present invention supporting a bladed array;
Figure 6 shows an exploded view of the frame of the present invention;
Figure 7 is a cross sectional view of the frame of the present invention showing a compliant lining disposed on the radially inner surface of the collar;
Figure 8 is a perspective view of a flexible joint provided on the collar;
Figure 9 shows a plan view of a separable joint provided on the collar;
Figure 10 shows the collar with couplings attached to the radially outer surface of the collar;
Figure 11 shows a detailed view of one embodiment of a coupling;
Figures 12 to 15 show various methods of supporting the frame of the present invention;
Figure 16a-c show a method of handling the frame of the present invention;
Figure 17a-e show views of the collar coupled to a support stand;
Figure 18 shows a view of the frame mounted in a geared means for rotating the collar;
Figure 19 is a side view of embodiment of the collar as shown in Figure 18, provided with gear engagement features;
Figure 20 shows an alternative embodiment of the frame coupled to a means for rotating the collar; and
Figure 21 shows a further embodiment of the frame with rotatable bearing means located between the collar and the support.

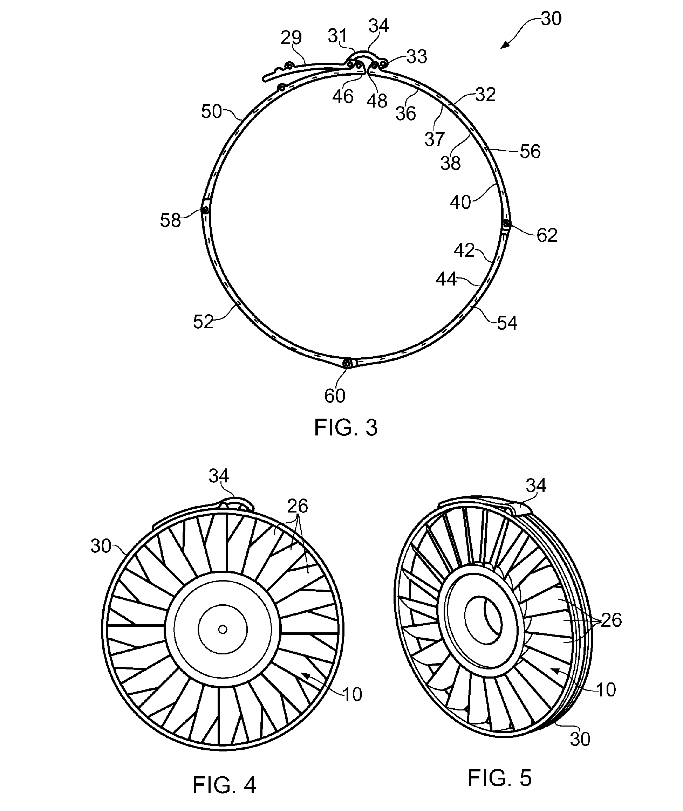

Presented in Figure 3 is a frame 30 according to the present invention. The frame 30 comprises a collar 32 provided with a closure mechanism 34. The frame 30 is configured for the support of a bladed array 10, such as a compressor rotor stage or turbine rotor stages for turbo machinery. As shown in Figure 4 and Figure 5, the collar 32 is configured to fit around and support the radially outer periphery of an array 10. The closure mechanism 34 is configured to, in use, close the collar 32 around the bladed array 10 such that at least part of at least some of the blades 26 are engaged with and/or captured by the radially inner surface 36 of the collar 32 such that the collar 32 and bladed array 10 are held in a fixed relationship relative to one another. A bladed array 10 is herein referred to and shown in the figures for context, but does not form part of the present invention.

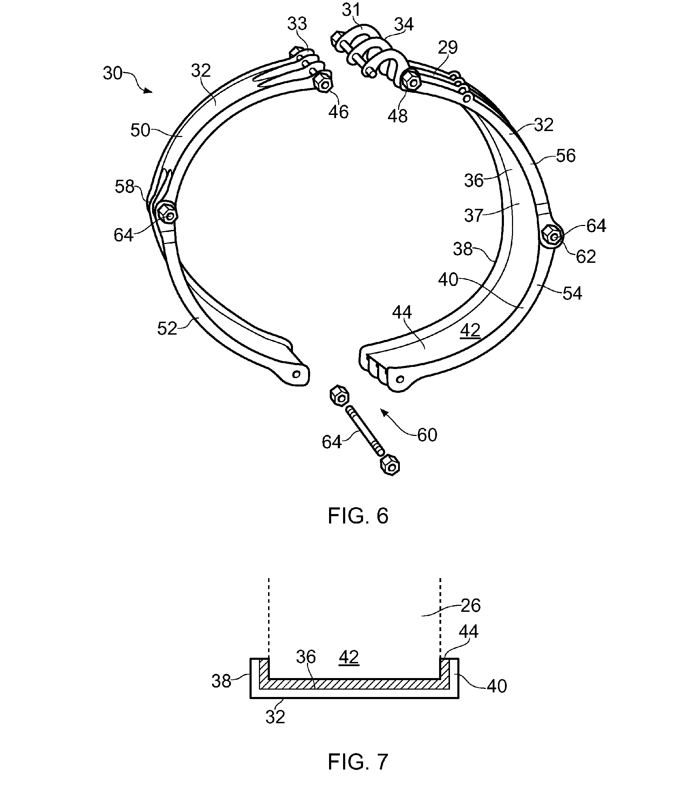

As best shown in Figure 6, the collar 32 is split to define two ends 46,48 which are linkable by the closure mechanism 34. Additionally the collar 32 comprises a first part 50, a second part 52, a third part 54 and a fourth part 56, all of which are arcuate. The first part 50 and second part 52 are linked to form a semicircular half of the collar 32. The third part 54 and fourth part 56 are likewise linked to form a complementary semicircular half of the collar 32.

Each semicircular half of the collar 32 is made up of an arcuate flexible sheet of material 37 provided with flanges 38,40 which extend radially inwardly from the long edges of the flexible sheet 37 to define a channel 42. The flexible sheet 37 may be made from sheet metal, plastic or composite material. The flanges 38,40 may be formed integrally with the flexible sheet 37 or joined to the flexible sheet 37 by some appropriate means, such as with rivets, nuts and bolts or welding. The flexible sheet 37 provides a continuous surface over the flexible joints 58,62. The inner surface 36 of the flexible sheet 37, including the flanges 38,40, is provided with a compliant lining 44, as shown in Figure 7. The compliant lining 44 may comprise a rubber or plastic material.

The flanges 38,40 of the first part 50 and second part 52 are linked by a first flexible joint 58 at about the mid way between the ends their respective semicircular half of the collar 32. The flanges 38,40 of the third part 54 and fourth part 56 are linked by a second flexible joint 62. The first flexible joint 58 and second flexible joint 62 permit a change in the curvature of the two semicircular halves. The flexible sheet 37 is configured to bend as the flexible joints 58,62 articulate.

The channel 42 is configured to receive at least part of at least some of the blade 26 of the bladed array 10. The flanges 38,40 capture the bladed array 10 inside the channel 42 of the collar 32, and hence prevent the bladed array 10 and collar 32 from becoming disconnected from one another. The compliant lining 44 is configured, in use, to at least in part conform to the shape of the blade parts 26 it is engaged with and/or captures. Hence the compliant lining 44 aids in accommodating any variations in diameter of bladed arrays 10 it is used with.

The free ends of the second part 52 and third part 54 are joined at a separable joint 60 and the free ends 46,48 of the fourth part 56 and first part 50 are joined by operation of the closure mechanism 34. The closure mechanism 34 comprises an arm 29 coupled to a jaw 31 on the first part 50, and latch 33. The arm 29 and jaw 31 are pivotable about the point they are connected to the collar 32. The arm 29 moves the jaw 31 to engage with a latch 33 on the fourth part 56. Once engaged, the action of bringing the arm 29 towards the collar 32 will bring the ends 46,48 together.

The separable joint 60 is hinged to permit the joined first and second parts 50,52 to pivot relative to one the joined third and fourth parts 54,56. The separable joint 60 comprises a pin 64 which is removable to enable separation of the separable joint 60, and hence disconnection of the joined first and second parts 50,52 from the joined third and fourth parts 54,56 as required.

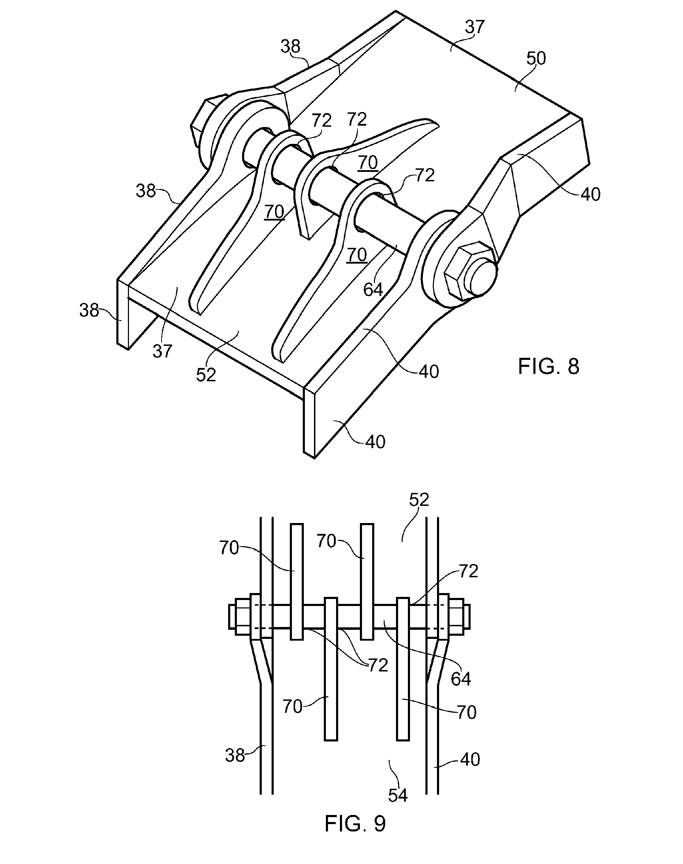

The first flexible joint 58 is shown in more detail in Figure 8. As stated above, the flanges 38,40 of the first part 50 and second part 52 are linked by a first flexible joint 58 at about mid way between the ends their respective semicircular half of the collar 32. The flexible joint 58 extends over a continuous section of the flexible sheet 37. The flexible joint 58 is made up of interdigitating flanges 70 provided on the radially outer surface of the flexible sheet 37, each of which has a passage 72 through which a pin 64 is passed. The flanges 38,40 are discontinuous, but linked by the pin 64 which passes through both ends of each section of the flanges 38,40, thereby forming a hinged joint.

The separable joint 60 is shown in more detail in Figure 9, and is made up of interdigitating flanges 70 provided on the radially outer surface of the flexible sheet 37 at the ends of the second part 52 and third part 54. Each of the flanges 70 has a passage 72 through which another pin 64 extends. The pin 64 also extends through the ends of the flanges 38,40 thereby forming a hinged joint. In both the flexible 58,62 and separable joints 60 the pin 64 may be a threaded bolt.

The joints shown here are by way of example only, and it will be appreciated that any appropriate flexible or hinged joint may be employed. The third separable joint 62 may have the same or a different form.

The joined first and second parts 50,52 and the joined third and fourth parts 54,56 may be assembled as one piece, hinged at the separable joint 60 and open at the closure means 34, before fitting the collar 32 around the bladed array 10. Alternatively, the two semicircular halves formed by the joined first and second parts 50,52 and the joined third and fourth parts 54,56 may be brought together around a bladed array 10 and then joined at the separable joint 60. The free ends 46,48 of the collar 32 are then clamped together by the closure means 34.

The collar 32 is configured to be compliant such that, in use, it may conform to the shape of the outer periphery of the bladed array 10.

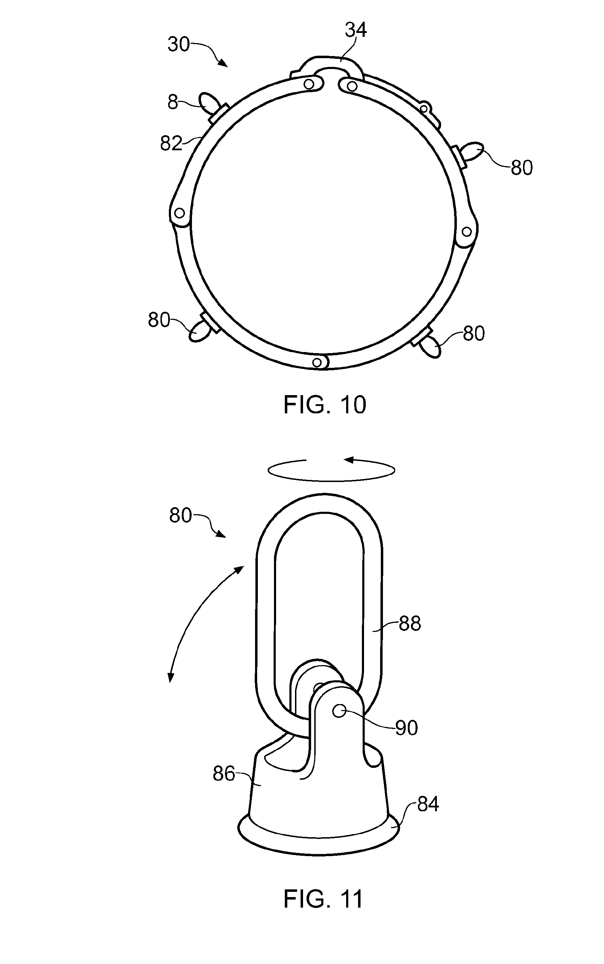

As shown in Figure 10, at least one coupling 80 is provided on the radially outer surface 82 of the collar 32 which, in use, is configured to support the weight of the frame 30 and bladed array 10. Any number of couplings 80 may be attached to the collar 32. Preferably at least four but no more than six couplings 80 are spaced around the radially outer surface 82 of the collar 32. One embodiment of a coupling 80 is shown in Figure 11. It comprises an anchor point 84 about which a base 86 of the coupling 80 may swivel, and a loop 88 which is trapped in the base 86 by an anchor 90. The loop 88 is free to pivot around the anchor 90.

Alternatively, or additionally, one or more couplings 80 may be provided as studs which define a bearing surface.

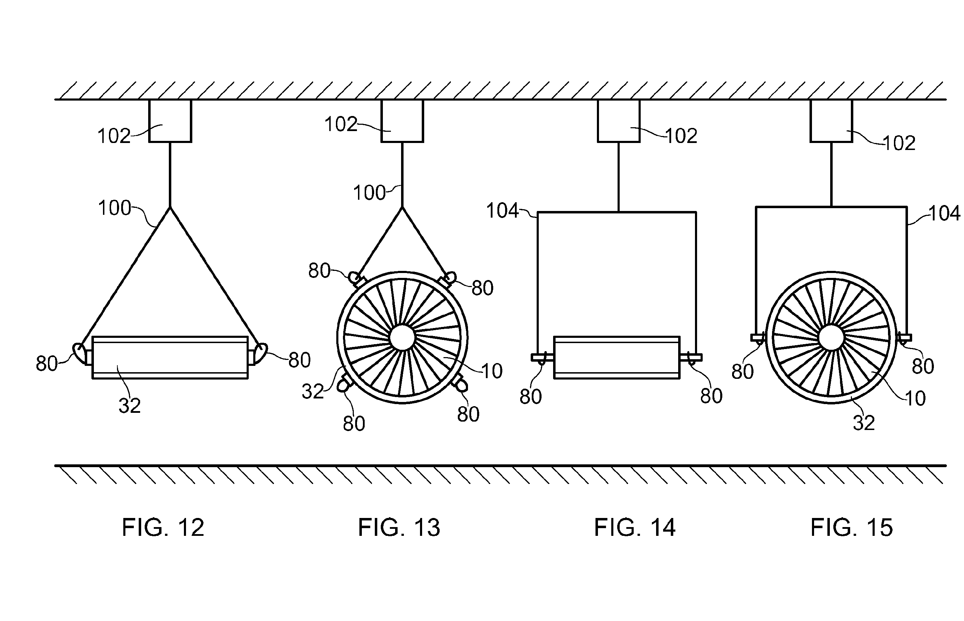

Figures 12 to 15 show various different ways in which the collar 32 may be suspended employing the couplings 80. For clarity, a bladed array 10 is shown carried by the collar 32. As shown in Figure 12 the couplings 80 may be used to suspend the frame 30 horizontally, with a "V" shaped cable 100 arrangement extending from a crane 102 to four couplings 80. By disconnecting two of the couplings 80, the frame 30 may be suspended vertically using the same arrangement, as shown in Figure 13. Alternatively a cradle 104 may be engaged with diametrically opposite couplings 80 which permit the frame 30 to be suspended either vertically, as shown in Figure 14, or rotated towards and including a horizontal direction as shown in Figure 15.

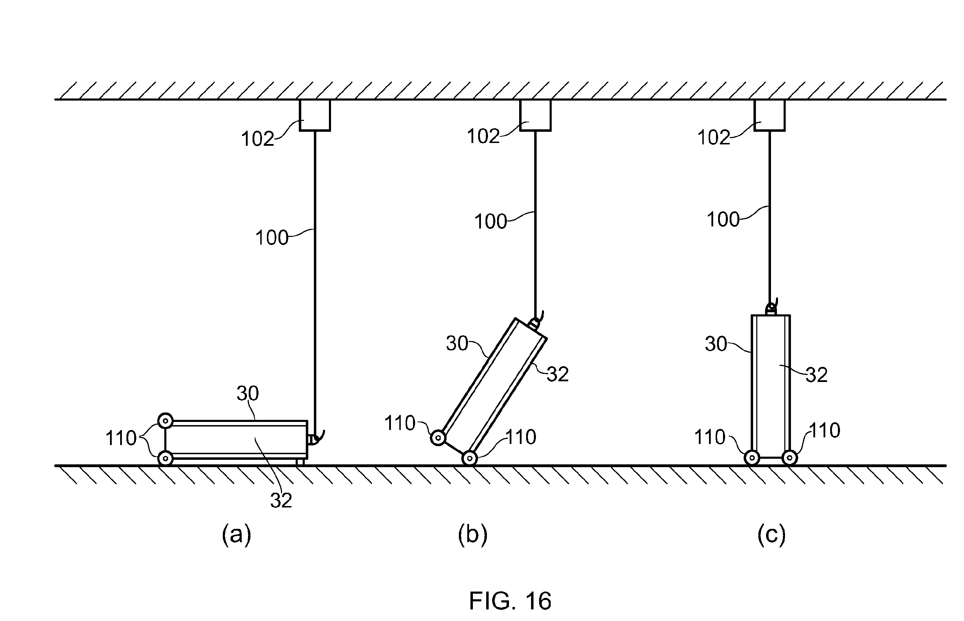

In an alternative embodiment, as shown in Figure 16, rollers 110 are provided on radially outer surface 82 of the collar 32 substantially diametrically opposite at least one coupling 80. The rollers 110 may be employed to act as pivot points such that by attaching a crane 102 via a cable 100 to the coupling 80 on a horizontal frame 30 (as shown in Figure 16a) the frame 30 may be lifted to a vertical position (as shown in Figure 16c). Provision of rollers 110 prevent a damage to the edge of the collar 32 and permit a controlled pivot/lifting motion. Additionally, once vertical, the rollers 110 may be kept in contact with the ground, which prevents the frame 30 from swinging, hence keeping it more stable, and reduces the load on the crane 102.

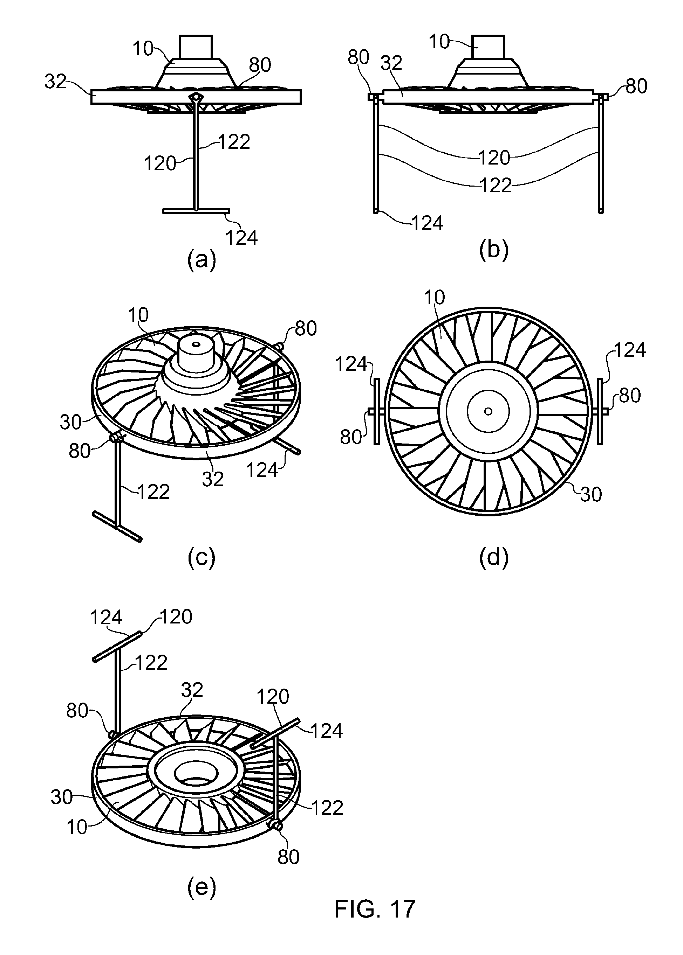

As shown in Figure 17a-d the frame may further comprise a stand 120 configured to support the collar 32. The stand 120 comprises at least one leg 122 which is pivotably engaged with the at least one coupling 80, thereby permitting rotation of the collar 32 from a horizontal to a vertical orientation. The leg 122 is in the form of a "T" with a foot 124 provided at the end of the leg 122 distal to the coupling 80. As shown in Figure 12e, the foot 124 of stand 120 may also be used as a handle to lift the frame 30 provided that the leg 122 is appropriately coupled with the coupling 80. A bladed array is shown located in the collar 32 in Figures 17a-e.

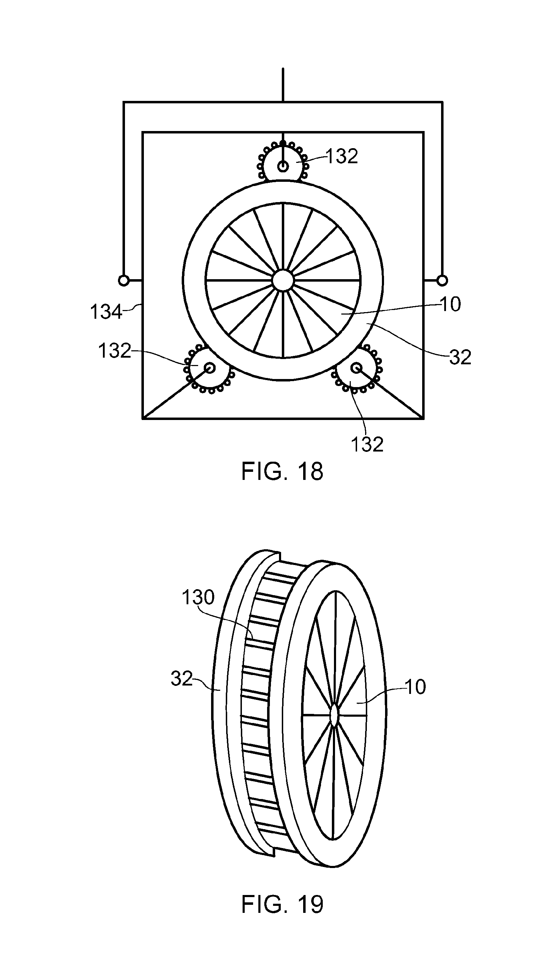

In a further alternative embodiment shown in Figure 18 and Figure 19, gear engagement features 130 are provided on the outer surface 82 of the collar 32 for engagement with means for rotation of the collar 32. In use the gear engagement features 130, perhaps in the form of grooves or gear teeth, are engaged with gear wheels 132 connected to a frame 134. The gear wheels 132 are turned by an actuator and hence rotate the frame 30.

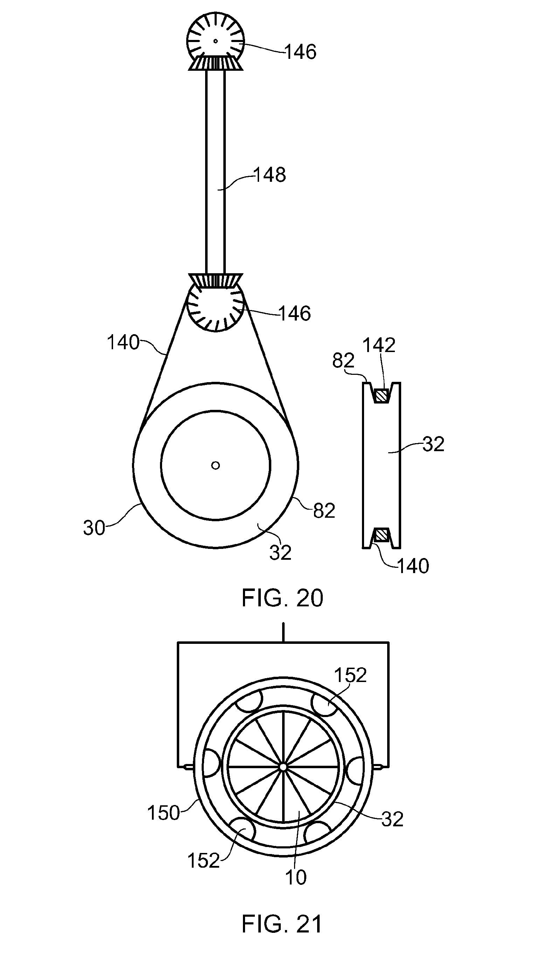

In a further embodiment shown in Figure 20 the radially outer surface 82 of the collar 32 defines a channel 140 configured to receive a drive belt or chain 140. The chain/belt 140 is connected to an actuation mechanism 144 comprising, for example, gears 146 and a shaft 148 to move the belt/chain 140 and hence rotate the frame 30.

In an alternative embodiment the frame 30 optionally comprises a support 150 radially outwards of the collar 32, with rotatable bearing means 152 located between the collar 32 and the support 150 such that the collar 32 and support 150 are rotatable relative to one another. An actuator (not shown) is provided to rotate the frame 30 within the support 150.

The assemblies and configurations of Figures 18 - 21 may be of use when a bladed array 10 installed in the frame 30 is submerged in a chemical treatment or wash tank, thereby permitting the bladed array 10 to be rotated in a controlled manner and without danger to the operator.

The present invention provides the advantage that the bladed array 10 is carried in the collar 32, which facilitates the manipulation of the array 10 in multiple dimensions using the collar and a lifting means, such as a crane.

Since the frame 30 can be used to lift the bladed array 10 in both vertical and horizontal orientations, the frame 30 can be used to handle the array 10 throughout the whole of a chemical processing line. Thus rather than having many tools (for example a crane, turning table, arbour and cradle as described with reference to the prior art) just the blade collar 32 and a lifting means need be used. The collar 32 leaves the bore 14 of the bladed array unobstructed, thus allowing the array to be etched, washed or cleaned more easily.

The frame 30 device affords protection to the blades 26 of the bladed array 10, thus preventing damage and removing a major cause of rework. This also makes the handling process significantly safer for the operator as sharp blade 26 edges are shielded from the operator by the collar 32.

The frame 30 of the present invention is significantly simpler, lighter and thus cheaper than current solutions to the handling of bladed arrays. This results in a reduction of set up time of the frame 30.

The frame 30 can be fitted bladed array during transportation, thus protecting the edges of the bladed array 10 from accidental damage during transit. This provides the advantage that when the array 10 arrives at its destination, the user may more quickly handle the bladed array without the need to remove protective packaging and then fit their own handling equipment.

## Claims

1. A frame for the support of a bladed array, such as a compressor rotor stage or turbine rotor stage for turbo machinery, comprising a collar configured to fit around a radially outer periphery of the array, whereby the collar is provided with a closure mechanism and the closure mechanism is configured to, in use, close the collar around the bladed array such that at least part of at least some of the blades are engaged with and/or captured by the radially inner surface of the collar such that the collar and bladed array are held in a fixed relationship relative to one another.

2. A frame as claimed in claim 1, wherein the inner surface of the collar comprises a flexible sheet of material provided with flanges which extend radially inwardly to define a channel configured to receive at least part of at least some of the blades.

3. A frame as claimed in claim 1 or claim 2 wherein the collar is provided with at least one flexible joint which extends over a continuous section of the flexible sheet of material.

4. A frame as claimed in any one of the preceding claims wherein the inner surface of the collar is provided with a compliant lining configured to, in use, at least in part conform to the shape of the blade parts it is engaged with and/or captures.

5. A frame as claimed in claim 4 wherein the compliant lining comprises a rubber and/or plastic material.

6. A frame as claimed in any one of the preceding claims wherein the collar is split to define two ends which are linkable by the closure mechanism.

7. A frame as claimed in claim 6 wherein the collar comprises parts which are linked to each other by a separable joint.

8. A frame as claimed in claim 7 wherein the separable joint is hinged to permit the parts to pivot relative to one another.

9. A frame as claimed in claim 7 or claim 8 wherein the separable joint comprises a pin which is removable to enable separation of the separable joint.

10. A frame as claimed in any one of the preceding claims wherein at least one coupling is provided on the radially outer surface of the collar which is configured to, in use, support the weight of the frame and bladed array.

11. A frame as claimed in claim 10 or claim 11 wherein the frame further comprises a stand configured to support the collar, the stand comprising at least one leg which is pivotably engaged with the at least one coupling.

12. A frame as claimed in any one of the preceding claims wherein gear engagement features are provided on the outer surface of the collar for engagement with means for rotation of the collar.

13. A frame as claimed in any one of claim 10 to 12 wherein rollers are provided substantially diametrically opposite the at least one coupling.

14. A frame as claimed in any one of the preceding claims wherein the frame further comprises a support radially outwards of the collar, with rotatable bearing means located between the collar and the support such that the collar and support are rotatable relative to one another.

15. A frame as claimed in any one of the preceding claims wherein radially outer surface of the collar defines a channel configured to receive a drive belt or chain.
